# EUROPEAN PATENT APPLICATION

(11) **EP 3 518 337 A1**
(43) Date of publication of application: **31.07.2019**
(21) Application number: 17850198.7
(22) Date of filing: 04.09.2017
(51) Int. Cl.: H01M 10/625

(54) **BICIRCULATING ENVIRONMENT TEMPERATURE CONTROL DEVICE FOR ELECTRIC AUTOMOBILE BATTERY PACK**

(30) Priority: 19.09.2016 CN 201610846466
(71) Applicant: Liu, Wanhui, Chongqing 400051 (CN)
(72) Inventor: Liu, Wanhui, Chongqing 400051 (CN)
(74) Representative: Gallego Jiménez, José Fernando
(86) International application number: PCT/CN2017/100334
(87) International publication number: WO 2018/049996

(57) **Abstract**

A dual-cycle ambient temperature control device for a battery pack of an electric vehicle comprises a semiconductor refrigerator and heater, an internal heat exchanger, an internal-circulation infusion pump, an external-circulation infusion pump, a compound heat exchanger, a heat exchange fan and an electronic control panel. The semiconductor refrigerator and heater, the internal-circulation infusion pump, the external-circulation infusion pump and the heat exchange fan are electrically connected to the electronic control panel. The dual-cycle ambient temperature control device is characterized in that: a rear heat exchanger of the semiconductor refrigerator and heater, the internal heat exchanger and the internal-circulation infusion pump are circularly connected in series and communicated through a pipeline, and a front heat exchanger of the semiconductor refrigerator and heater, the compound heat exchanger and the external-circulation infusion pump are circularly connected in series and communicated through another pipeline, so that internal and external dual-cycle refrigerant circulation flow loops separated from each other are formed in the same temperature control device. The dual-cycle ambient temperature control device has the characteristics of a simple structure and high working efficiency.

## Description

### TECHNICAL FIELD

The present invention relates to an ambient temperature control device for a battery pack of an electric vehicle and in particular to an ambient temperature control device with a semiconductor refrigerating and heating function for a battery pack of an electric vehicle.

### BACKGROUND

Currently, a battery pack of an electric vehicle on the market is not equipped with an ambient temperature control device, which results in poor charging and discharging performance of the battery pack when the ambient temperature is too low. The battery pack must stop working when the ambient temperature is extremely high. As a result, a limitation of the requirement for the ambient temperature negatively impacts and constrains the development of the electric vehicle market.

### SUMMARY

An objective of the present invention is to provide an ambient temperature control device with a semiconductor refrigerating and heating function for a battery pack of an electric vehicle. The ambient temperature control device may control an ambient temperature of the battery pack of the electric vehicle to be within a specified range, to guarantee normal charging and discharging performance of the battery pack of the electric vehicle. The ambient temperature control device has the characteristics of a simple structure and high working efficiency.

The objective of the present invention is fulfilled by the following technical solution. A rear heat exchanger and a front heat exchanger of a semiconductor refrigerator and heater are suitably made from a metal material with favorable heat conductivity. An efficient semiconductor chilling plate is selected. The semiconductor chilling plate, the rear heat exchanger and the front heat exchanger are assembled into the semiconductor refrigerator and heater. A rear heat exchanger liquid refrigerant inflow/outflow opening which allows a liquid refrigerant to pass is formed in the rear heat exchanger of the semiconductor refrigerator and heater. An S-shaped curved rear heat exchanger liquid refrigerant flow loop communicated with the rear heat exchanger liquid refrigerant inflow/outflow opening is formed in the rear heat exchanger of the semiconductor refrigerator and heater. A front heat exchanger liquid refrigerant inflow/outflow opening which allows the liquid refrigerant to pass is formed in the front heat exchanger of the semiconductor refrigerator and heater. An S-shaped curved front heat exchanger liquid refrigerant flow loop communicated with the front heat exchanger liquid refrigerant inflow/outflow opening is formed in the front heat exchanger of the semiconductor refrigerator and heater. An internal heat exchanger is made from a material with favorable heat conductivity. An internal heat exchanger liquid refrigerant inflow/outflow opening which allows the liquid refrigerant to pass is formed in the internal heat exchanger. An internal heat exchanger liquid refrigerant flow loop communicated with the internal heat exchanger liquid refrigerant inflow/outflow opening is formed in the internal heat exchanger. A compound heat exchanger is made from a material with favorable heat conductivity. A compound heat exchanger liquid refrigerant inflow/outflow opening which allows the liquid refrigerant to pass is formed in the compound heat exchanger. A compound heat exchanger liquid refrigerant flow loop communicated with the compound heat exchanger liquid refrigerant inflow/outflow opening is formed in the compound heat exchanger. A special electronic control panel is manufactured. An internal-circulation infusion pump, an external-circulation infusion pump and a heat exchange fan are suitably selected. The semiconductor refrigerator and heater, the internal-circulation infusion pump, the external-circulation infusion pump and the heat exchange fan are electrically connected to the electronic control panel. The internal heat exchanger is mounted inside a battery pack mounting box of the electric vehicle. The semiconductor refrigerator and heater and the compound heat exchanger are mounted outside the battery pack mounting box of the electric vehicle. The rear heat exchanger of the semiconductor refrigerator and heater, the internal heat exchanger and the internal-circulation infusion pump are circularly connected in series and communicated through a pipeline, and the front heat exchanger of the semiconductor refrigerator and heater, the compound heat exchanger and the external-circulation infusion pump are circularly connected in series and communicated through another pipeline, so that internal and external dual-cycle refrigerant circulation flow loops separated from each other are formed in the same temperature control.

The ambient temperature control device follows the working principle as below. Here, refrigeration of the ambient temperature control device is taken as an example for explanation. After the ambient temperature control device for the battery pack of the electric vehicle is electrified, the semiconductor refrigerator and heater, the internal-circulation infusion pump, the external-circulation infusion pump and the heat exchange fan start to work. The internal heat exchanger absorbs heat from the interior of the battery pack mounting box without stop. The absorbed heat is transferred to the rear heat exchanger of the semiconductor refrigerator and heater by means of the liquid refrigerant circulating flow loop communicated with the rear heat exchanger of the semiconductor refrigerator and heater, then to the front heat exchanger of the semiconductor refrigerator and heater through working of the semiconductor chilling plate, and finally to the compound heat exchanger through circulating flow of the liquid refrigerant. Since the heat exchange fan works for heat dissipation, the heat on the compound heat exchanger is dissipated to the surrounding air without stop. The heat in the battery pack mounting box is continuously absorbed. Thus, the temperature is reduced. The ambient temperature of the battery pack of the electric vehicle is controlled to be within the specified range.

### BRIEF DESCRIPTION OF THE DRAWINGS

The accompanying drawings of the present invention are described as below:
FIG. 1 is a principle structural schematic view according to one embodiment of the present invention; and
FIG. 2 is a front sectional view of a front heat exchanger and a rear heat exchanger according to one embodiment of the present invention.

The reference signs represent the following components: 1-internal heat exchanger; 2-internal-circulation infusion pump; 3-rear heat exchanger; 4-semiconductor chilling plate; 5-front heat exchanger; 6-external-circulation infusion pump; 7-compound heat exchanger; 8-heat exchange fan; 9-front heat exchanger liquid refrigerant flow loop and rear heat exchanger liquid refrigerant flow loop; 10-front heat exchanger liquid refrigerant inflow/outflow opening and rear heat exchanger liquid refrigerant inflow/outflow opening.

### DETAILED DESCRIPTION

The present invention will be further described below in conjunction with the accompanying drawings and embodiments.

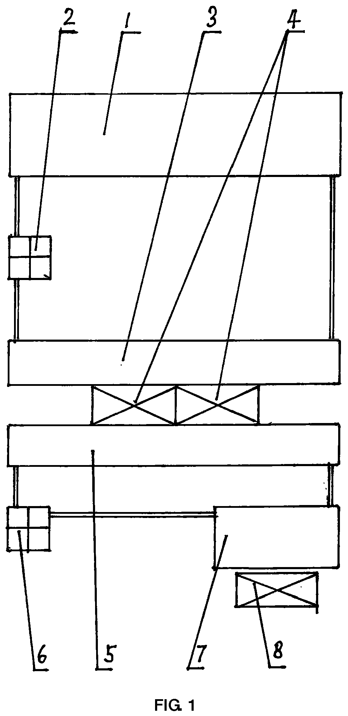

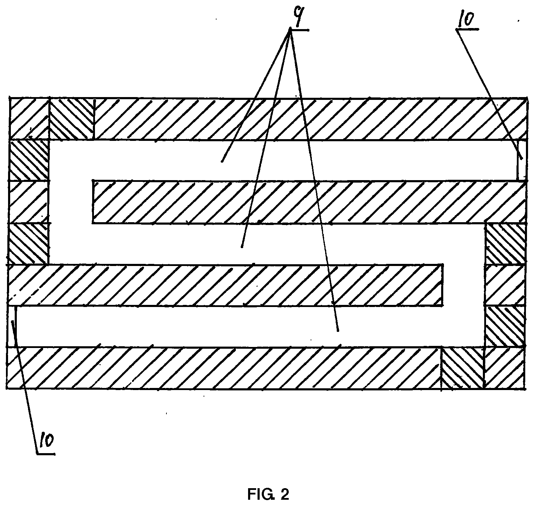

As shown in FIG. 1 and FIG. 2, a rear heat exchanger 3 and a front heat exchanger 5 of a semiconductor refrigerator and heater are suitably made from a metal material with favorable heat conductivity. An efficient semiconductor chilling plate 4 is selected. The semiconductor chilling plate 4, the rear heat exchanger 3 and the front heat exchanger 5 are assembled into the semiconductor refrigerator and heater. A rear heat exchanger liquid refrigerant inflow/outflow opening 10 which allows a liquid refrigerant to pass is formed in the rear heat exchanger 3 of the semiconductor refrigerator and heater. An S-shaped curved rear heat exchanger liquid refrigerant flow loop 9 communicated with the rear heat exchanger liquid refrigerant inflow/outflow opening 10 is formed in the rear heat exchanger 3 of the semiconductor refrigerator and heater. A front heat exchanger liquid refrigerant inflow/outflow opening 10 which allows the liquid refrigerant to pass is formed in the front heat exchanger 5 of the semiconductor refrigerator and heater. An S-shaped curved front heat exchanger liquid refrigerant flow loop 9 communicated with the front heat exchanger liquid refrigerant inflow/outflow opening 10 is formed in the front heat exchanger 5 of the semiconductor refrigerator and heater. An internal heat exchanger 1 is made from a material with favorable heat conductivity. An internal heat exchanger liquid refrigerant inflow/outflow opening which allows the liquid refrigerant to pass is formed in the internal heat exchanger 1. An internal heat exchanger liquid refrigerant flow loop communicated with the internal heat exchanger liquid refrigerant inflow/outflow opening is formed in the internal heat exchanger 1. A compound heat exchanger 7 is made from a material with favorable heat conductivity. A compound heat exchanger liquid refrigerant inflow/outflow opening which allows the liquid refrigerant to pass is formed in the compound heat exchanger 7. A compound heat exchanger liquid refrigerant flow loop communicated with the compound heat exchanger liquid refrigerant inflow/outflow opening is formed in the compound heat exchanger 7. A special electronic control panel is manufactured. An internal-circulation infusion pump 2, an external-circulation infusion pump 6 and a heat exchange fan 8 are suitably selected. The semiconductor refrigerator and heater, the internal-circulation infusion pump 2, the external-circulation infusion pump 6 and the heat exchange fan 8 are electrically connected to the electronic control panel. The internal heat exchanger 1 is mounted inside a battery pack mounting box of the electric vehicle. The semiconductor refrigerator and heater and the compound heat exchanger 7 are mounted outside the battery pack mounting box of the electric vehicle. The rear heat exchanger 3 of the semiconductor refrigerator and heater, the internal heat exchanger 1 and the internal-circulation infusion pump 2 are circularly connected in series and communicated through a pipeline, and the front heat exchanger 5 of the semiconductor refrigerator and heater, the compound heat exchanger 7 and the external-circulation infusion pump 6 are circularly connected in series and communicated through another pipeline, so that internal and external dual-cycle refrigerant circulation flow loops separated from each other are formed in the same temperature control device.

The ambient temperature control device follows the working principle as below. Here, refrigeration of the ambient temperature control device is taken as an example for explanation. After the ambient temperature control device for the battery pack of the electric vehicle is electrified, the semiconductor refrigerator and heater, the internal-circulation infusion pump 2, the external-circulation infusion pump 6 and the heat exchange fan 8 start to work. The internal heat exchanger 1 absorbs heat from the interior of the battery pack mounting box without stop. The absorbed heat is transferred to the rear heat exchanger 3 of the semiconductor refrigerator and heater by means of the liquid refrigerant circulating flow loop communicated with the rear heat exchanger 3 of the semiconductor refrigerator and heater, then to the front heat exchanger 5 of the semiconductor refrigerator and heater through working of the semiconductor chilling plate 4, and finally to the compound heat exchanger 7 through circulating flow of the liquid refrigerant. Since the heat exchange fan 8 works for heat dissipation, the heat on the compound heat exchanger 7 is dissipated to the surrounding air without stop. The heat in the battery pack mounting box is continuously absorbed. Thus, the temperature is reduced. The ambient temperature of the battery pack of the electric vehicle is controlled to be within a specified range.

The internal heat exchanger 1 may consist of at least one subsidiary internal heat exchanger. Each subsidiary internal heat exchanger is mounted in a subsidiary battery pack mounting box.

The internal heat exchanger liquid refrigerant flow loop communicated with the internal heat exchanger liquid refrigerant inflow/outflow opening is formed in the internal heat exchanger 1 and may be curved into an S shape.

The internal heat exchanger liquid refrigerant flow loop communicated with the internal heat exchanger liquid refrigerant inflow/outflow opening and formed in the internal heat exchanger 1 may also consist of at least two parallel liquid refrigerant flow loops, which are connected in parallel and communicated with each other.

The internal heat exchanger 1 may be a wire-and-tube heat exchanger formed by welding a metal tube with a metal wire and then performing bending forming.

The internal heat exchanger 1 may also be a tube-and-sheet heat exchanger formed by tightly bonding a metal tube to a metal sheet and then performing bending forming.

The rear heat exchanger liquid refrigerant flow loop 9 communicated with the rear heat exchanger liquid refrigerant inflow/outflow opening 10 and formed in the rear heat exchanger 3 of the semiconductor refrigerator and heater may also consist of at least two parallel liquid refrigerant flow loops, which are connected in parallel and communicated with each other.

The front heat exchanger liquid refrigerant flow loop 9 communicated with the front heat exchanger liquid refrigerant inflow/outflow opening 10 and formed in the front heat exchanger 5 of the semiconductor refrigerator and heater may also consist of at least two parallel liquid refrigerant flow loops, which are connected in parallel and communicated with each other.

The compound heat exchanger 7 may be a wire-and-tube heat exchanger formed by welding a metal tube with a metal wire and then performing bending forming.

The compound heat exchanger 7 may also be a finned heat exchanger formed by combining metal tubes with metal fins.

## Claims

1. A dual-cycle ambient temperature control device for a battery pack of an electric vehicle, comprising a semiconductor refrigerator and heater, an internal heat exchanger (1), an internal-circulation infusion pump (2), an external-circulation infusion pump (6), a compound heat exchanger (7), a heat exchange fan (8) and an electronic control panel, wherein the semiconductor refrigerator and heater, the internal-circulation infusion pump (2), the external-circulation infusion pump (6) and the heat exchange fan (8) are electrically connected to the electronic control panel; the dual-cycle ambient temperature control device being **characterized in that**: a rear heat exchanger (3) of the semiconductor refrigerator and heater, the internal heat exchanger (1) and the internal-circulation infusion pump (2) are circularly connected in series and communicated through a pipeline, and a front heat exchanger (5) of the semiconductor refrigerator and heater, the compound heat exchanger (7) and the external-circulation infusion pump (6) are circularly connected in series and communicated through another pipeline, so that internal and external dual-cycle refrigerant circulation flow loops separated from each other are formed in the same temperature control device.

2. The dual-cycle ambient temperature control device for the battery pack of the electric vehicle according to claim 1, wherein the internal heat exchanger (1) is mounted in a battery pack mounting box of the electric vehicle.

3. The dual-cycle ambient temperature control device for the battery pack of the electric vehicle according to claim 1, wherein the internal heat exchanger (1) consists of at least one subsidiary internal heat exchanger, and each subsidiary internal heat exchanger is mounted in a subsidiary battery pack mounting box.

4. The dual-cycle ambient temperature control device for the battery pack of the electric vehicle according to claim 1, wherein the heat exchange fan (8) is mounted beside the compound heat exchanger (7).
